# EUROPEAN PATENT APPLICATION

(11) **EP 1 906 391 A1**
(43) Date of publication of application: **02.04.2008**
(21) Application number: 07116228.3
(22) Date of filing: 12.09.2007
(51) Int. Cl.: G11B 7/0065, G11B 7/09, G11B 7/24, G11B 7/26

(54) **Optical recording medium utilizing holography and method for manufacturing the same and optical recording and reproducing apparatus**

(30) Priority: 28.09.2006 JP 2006265756
(71) Applicant: Kabushiki Kaisha Toshiba, Minato-ku, Tokyo 105-8001 (JP)
(72) Inventor: Matsumoto, Kazuki c/o Intellectual Property Division Toshiba Corporation, TOKYO 105-8001 (JP); Ashida, Sumio c/o Intellectual Property Division Toshiba Corporation, TOKYO 105-8001 (JP); Hirao, Akiko c/o Intellectual Property Division Toshiba Corporation, TOKYO 105-8001 (JP); Hayase, Rumiko c/o Intellectual Property Division Toshiba Corporation, TOKYO 105-8001 (JP); Sasao, Norikatsu c/o Intellectual Property Division Toshiba Corporation, TOKYO 105-8001 (JP); Kamikawa, Takahiro c/o Intellectual Property Division Toshiba Corporation, TOKYO 105-8001 (JP)
(74) Representative: Joly, Jean-Jacques

(57) **Abstract**

An optical recording medium (1) has a transparent substrate (4) having a first surface and a second surface, a recording layer (3) provided on the first surface of the substrate (4) and on which a light beam (6) is incident to record information as a hologram (8), and a servo layer (5) provided on the second surface of the substrate (4) and including a phase change layer (53) in which servo information is recorded as a phase change. The servo information is recorded as changes in the phase of the phase change layer (53).

## Description

The present invention relates to an optical recording medium utilizing holography and a method for manufacturing the optical recording medium, as well as an optical recording and reproducing apparatus.

An optical recording media such as optical magnetic media, phase change media, and pigment media have been in practical use, on which information is optically recorded by an irradiation of a light beam. There has been a growing need to increase the capacity of optical recording media in order to enable information such as high-definition videos to be recorded for a long time. To meet the demand, proposal has been made of what is called a holographic recording and reproducing apparatus using optical recording media utilizing holography, particularly digital volume holography.

The holographic recording and reproducing apparatus generally irradiates a holographic recording medium with an information light beam in a two-dimensional pattern containing information and a reference light beam containing no information to allow the information light beam and the reference light beam to interfere with each other inside the medium. The information is thus recorded as interference fringes (hereinafter referred to as a hologram). The recorded information is reproduced by irradiating the hologram only with the reference light beam and detecting a diffracted light beam (reproduction light beam) from the hologram. A recording and reproducing apparatus using digital volume holography utilizes the thickness direction of the recording medium to three-dimensionally records a hologram to increase diffraction efficiency. This enables multiple pieces of information in the same area in the medium, further increasing recording capacity.

During reproduction, when the location (irradiation angle, irradiation position, and the like) of the reference light beam applied to the hologram in the recording medium is slightly displaced from the location of the reference light beam during recording, the phase of the reference light beam cannot be matched with that of the hologram even though the hologram is irradiated with the reference light beam. Consequently, no reproduction light beam can be obtained. By recording a hologram of the reference light beam and another information light beam with the reference light beam located so as to prevent the reproduction light beam from being obtained, it is possible to record plural pieces of two-dimensional information in the same area inside the optical recording medium in accordance with the respective locations of the reference light beam.

In general, the holographic recording and reproducing apparatus uses a two-beam interference method of applying the information light beam in a direction different from that in which the reference light beam is applied. The two-beam interference method is characterized in that no reproduction light beam is obtained when the location of the reference light beams is slightly displaced. It is thus necessary to precisely control the positional relationship between the information light beam and the reference light beam and the recording medium. This reduces the portability of the recording medium and the compatibility between different recording and reproducing apparatuses.

To solve this problem, collinear holography (registered trade name) has been noted which records a hologram by using one objective lens to allow information light beam and the reference light beam to enter a recording medium as one light beam on the same axis. H. Horimai, Jun Li, "A novel collinear optical setup for holographic data storage system", Proc. SPIE 5380, 297-303 (2004) discloses collinear holography that uses one spatial optical modulator to generate an information light beam and a modulated reference light beam for speckle multiple recording. With the collinear holography, one objective lens focuses the information light beam and the reference light beam on the recording medium to irradiate the recording medium with the beams. Accordingly, during recording and reproduction, only the positional relationship between the objective lens and the recording medium needs to be controlled. The collinear holography is noted as a holographic recording method that can effectively utilize a servo technique developed for conventional optical disks such as CDs and DVDs.

In general, a recording material used for holography desirably has no recording threshold but exhibits a recording property called a photon mode in which optical properties vary linearly with light intensity. Accordingly, it is difficult to apply a method used for conventional optical disks such as a method of increasing light intensity only during information recording while performing servo with faint light.

That is, conventional optical disk devices perform servo using scattered light and diffracted light beams resulting from recesses and projections such as pits and wobble tracks which are formed on a reflection surface and a recording surface. In contrast, digital volume holography is volume recording that also utilizes the thickness direction of a recording layer. Thus, in this case, the reflection surface is desirably a mirror surface that prevents the generation of scattered light and diffracted light beams.

To meet this demand, H. Horimai, Xiaodi Tan, Jun Li, "Collinear holography", Appl. Opt. 44, 2575-2579 (2005) and Jpn. Pat. Appln. KOKAI Publication No. 2004-265472 uses a recording/reproducing light beam and a servo light beam which have different wavelengths. According to H. Horimai, Xiaodi Tan, Jun Li, "Collinear holography", Appl. Opt. 44, 2575-2579 (2005) and Jpn. Pat. Appln. KOKAI Publication No. 2004-265472, a wavelength selection layer with a mirror surface is provided on a servo layer in which servo information is recorded as a recess and projection pattern comprising pits and wobble tracks; the wavelength selection layer allows the servo light beam to pass through but not the recording/reproducing light beam. The recording and reproducing apparatus achieves recording and reproduction while performing servo by displacing the focal points of the servo light beam and the recording/reproducing light beam from each other in an axial direction in association with the presence of the wavelength selection layer.

The technique in H. Horimai, Xiaodi Tan, Jun Li, "Collinear holography", Appl. Opt. 44, 2575-2579 (2005) records servo information using the recess and projection pattern and uses the recording/reproducing light beam and servo light beam having different wavelengths. This poses the following problems. (a) The need for the wavelength selection layer increases the cost of the medium. (b) Significant variations may occur among optical heads owing to the need to slightly displace the focal points of the servo light beam and the recording/reproducing light beam in the axial direction in association with the distance between the servo layer and the wavelength selection layer. (c) The distance between the servo layer and the wavelength selection layer needs to be set precisely uniform. (d) This reduces the compatibility among apparatuses.

According to an aspect of the present invention, there is provided a n optical recording medium comprising:
a recording layer having an incident side and an opposite side, a light beam being incident on the incident side to record information as a hologram produced in the recording layer; and
a servo layer which is provided so as to face the opposite side of the recording layer and includes a phase change layer, servo information being recorded as an optical phase change between a crystal phase and a non-crystal phase in the phase change layer.

According to another aspect of the present invention, there is provided an optical recording medium comprising:
a transparent substrate having a first and a second surface opposing the first surface;
a recording layer provided on the first surface of the substrate and on which a light beam is incident to record information as a hologram produced in the recording layer; and
a servo layer provided on the second surface of the substrate and including a phase change layer in which servo information is recorded as an optical phase change between a crystal phase and a non-crystal phase in the phase change layer.

According to yet another aspect of the present invention, there is provided a method for manufacturing an optical recording medium comprising:
a transparent substrate having a first surface and a second surface opposing the first surface;
a recording layer provided on the first surface of the substrate, a first light beam being incident to record information as a hologram produced in the recording layer; and
a servo layer provided on the second surface of the substrate and including a phase change layer in which servo information is recorded as an optical phase change between a crystal phase and a non-crystal phase in the phase change layer, the method comprising:
   heating the phase change layer to produce the phase change on the phase change layer and record the servo information.

According to further aspect of the present invention, there is provided a n optical recording and reproducing apparatus comprising:
an optical recording medium comprising:
   a transparent substrate having a first surface and a second surface opposing the first surface;
   a recording layer provided on the first surface of the substrate; and
   a servo layer provided on the second surface of the substrate and including a phase change layer in which servo information is recorded as an optical phase change between a crystal phase and a non-crystal phase in the phase change layer;
   a first light source which generates a first light beam having a first wavelength;
   a second light source which generates a second light beam having a second wavelength;
   a spatial optical modulator configured to split the first light beam and produce an information light beam modulated in accordance with information and a reference light beam in a recording mode;
   an irradiation unit which irradiates a combination of the information light beam and the reference light beam on the recording layer to record information as a hologram produced in the recording layer in the recording mode and irradiates the second light beam on the servo layer;
   split photo-detectors which detect the second light beam reflected from the servo layer to output detection signals; and
   a servo unit configured to generate servo signal from the output detection signals.

The invention can be more fully understood from the following detailed description when taken in conjunction with the accompanying drawings, in which:
FIG. 1 is a sectional view schematically showing an optical recording medium in accordance with one embodiment;
FIG. 2 is a sectional view schematically showing a servo layer shown in FIG. 1;
FIG. 3 is a diagram illustrating the contrast, at a servo light beam wavelength, of servo information in the servo layer shown in FIG. 2;
FIG. 4 is a diagram illustrating the contrast, at a recording/reproducing light beam wavelength, of servo information in the servo layer shown in FIG. 2;
FIG. 5 is a schematic diagram showing an optical system of an optical recording and reproducing apparatus used for collinear holographic recording in accordance with one embodiment;
FIG. 6 is a plan view schematically showing reference light beam patterns in accordance with one embodiment;
FIG. 7 is a plan view schematically showing reference light beam patterns for reproduction in accordance with one embodiment;
FIG. 8 is a schematic diagram showing an example of a servo information recording apparatus in accordance with one embodiment;
FIG. 9 is a sectional view schematically showing a servo stamper in accordance with one embodiment;
FIG. 10 is a process diagram showing an example of a method for manufacturing a servo stamper shown in FIG. 9;
FIG. 11 is a schematic diagram showing an example of a servo information transfer apparatus in accordance with one embodiment; and
FIG. 12 is a sectional view schematically showing a substrate with servo information as a comparative example.

With reference to the drawings, there will be described an optical recording medium utilizing holography in accordance with the present invention and a method for manufacturing the optical recording medium, as well as an optical recording and reproducing apparatus.

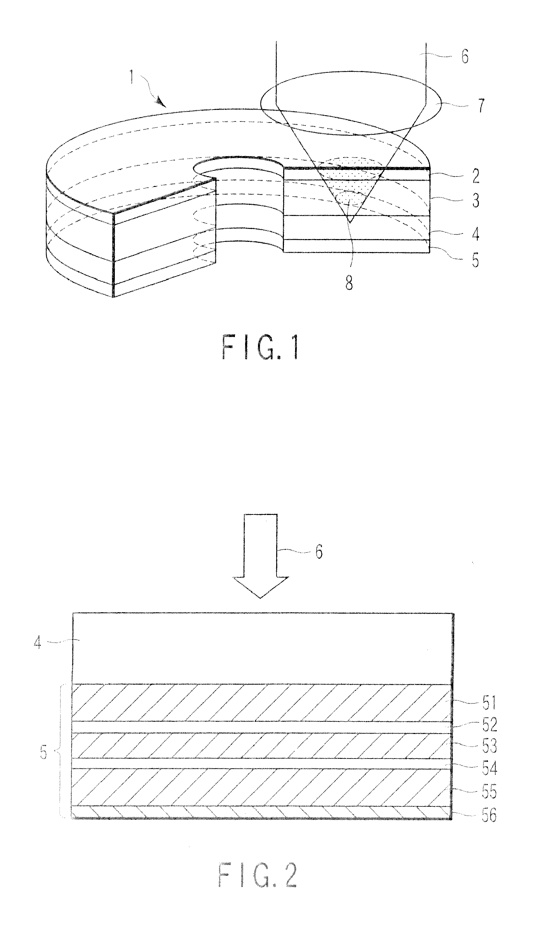

FIG. 1 schematically shows an optical recording medium 1 used for reflective collinear holography recording and a part of an optical system which is located close to the optical recording medium 1. The optical recording medium 1 has a transparent substrate 4 made of a transparent material such as glass or polycarbonate, a recording layer 3 provided on one major layer of the substrate 4, a servo layer 5 provided on the other major layer of the substrate 4, and a protective layer 2 provided on a light beam incidence side of the recording layer 3. The optical recording medium 1 is typically a disk but may be in card or block form. The shape of the recording medium 1 is not particularly limited. The optical recording medium 1 is irradiated with a recording/reproducing light beam and a servo light beam from the protective layer 2. As described below, the wavelength of the recording/reproducing light beam is different from that of the servo light beam.

The protective layer 2 may be omitted depending on an environment in which the medium 1 is used. The recording layer 3 is formed of a holographic recording material having optical properties such as absorption coefficient and reflectance. When the recording layer 3 is irradiated with an electromagnetic wave, that is, a light beam, the optical properties of the recording layer 3 is varied depending on the intensity of the optical beam. The holographic recording material used for the recording layer 3 may be organic or inorganic. Examples of the organic material include, for example, a photo polymer, a photo-reflective polymer, and a photochromic pigment-dispersed polymer. Examples of the inorganic material include, for example, lithium niobate and barium titanate.

The servo layer 5 includes a phase change layer as described below. Servo information is recorded in the phase change layer as a phase change (the change between a crystal phase and a non-crystal phase). In other words, servo information is recorded in the servo layer 5 as changes in reflectance for the servo light beam caused by phase changes in the phase change layer, that is, changes in reflectance which can be determined only by irradiation with the servo light beam. The servo information includes information required to perform servo (particularly tracking servo) on the optical recording and reproducing apparatus, and address information. The servo information is recorded in the servo layer 5 in form of a servo mark or a servo track resulting from phase changes in the phase change layer. The servo mark is, for example, a non-crystal phase area intermittently formed in a track direction. The servo track is, for example, the non-crystal phase area continuously and linearly formed in the track direction. Description will be given below of the method for recording servo information in the servo layer 5.

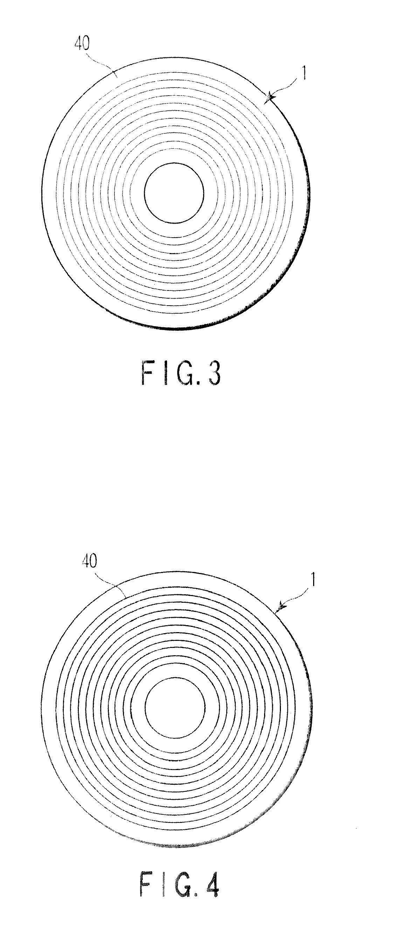

The servo layer 5 has a multilayer structure including a first interference layer 51, an interface layer 52, a phase change layer 53, an interface layer 54, a second interference layer 55, and a reflection layer 56 which are sequentially stacked on one surface (the lower surface in the figure) of the transparent substrate 4, for example, as shown in FIG. 2. Typical examples of a phase change material used for the phase change layer 53 include a chalcogenide-based metal compound, for example, GeSbTe.

The first interference layer 51 and the second interference layer 55 are intended to emphasize an optical contrast to the servo light beam resulting from a change in the state of the phase change layer 53 (crystal phase/non-crystal phase) to reduce an optical contrast to the recording/reproducing light beam. The first interference layer 51 and the second interference layer 55 are preferably made of, for example, ZnS-SiO2. The reflection layer 56 may basically be made of any material provided that the material exhibits a sufficient reflectance for the servo light beam and the recording/reproducing light beam. A material for the reflection layer 56 may be, for example, Al, Ag, or an alloy containing at least one of Al and Ag. If servo information is recorded by contact heating provided by a stamper described below, the second interference layer 55 may be omitted or the interface layer 54 and the second interference layer 55 may be omitted in order to improve the definition of servo information to be recorded.

The recording/reproducing light beam 6, applied to the optical recording medium 1, is focused by an objective lens 7 so as to have the minimum beam diameter on a surface of the servo layer 5. While information is being recorded, irradiation with the recording/reproducing light beam 6 forms a hologram 8 with a volume in the optical recording medium 1 also utilizing the thickness direction of the medium 1. While information is being reproduced, a reflected light beam from the hologram 8 is detected.

FIGS. 3 and 4 schematically show the contrast, at a servo light beam wavelength and a recording/reproducing light beam wavelength, respectively, of servo information recorded in the servo layer 5. The contrast is expressed by the thickness of lines indicating the servo information 40. The contrast increases in proportion to the thickness of the lines. That is, the contrast of the servo information 40 is high at the servo light beam wavelength (see FIG. 4) and is low at the recording/reproducing light beam (see FIG. 3). In particular, for the recording/reproducing light beam, the optical constants and film thicknesses of the phase change layer 53 and the interference layers 51 and 55 in FIG. 2 are desirably controlled so as to reduce the contrast of the servo information 40 to the degree that the surface of the servo layer 5 can be considered to be a substantial mirror surface.

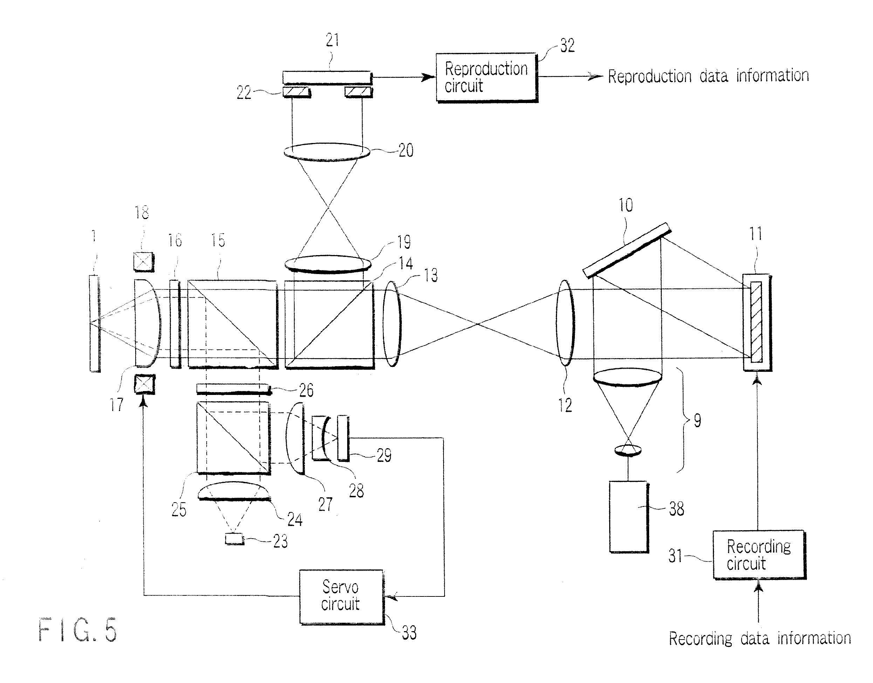

Now, description will be given of an example of an optical recording and reproducing apparatus using the optical recording medium 1. FIG. 5 shows a collinear holography optical recording and reproducing apparatus in accordance with one embodiment which uses the optical recording medium 1, shown in FIG. 1. In the collinear holography optical recording and reproducing apparatus, an information light beam and a modulated reference light beam both of which are generated using one spatial optical modulator are coaxially irradiated on the optical recording medium 1 to record information as a hologram.

In connection with coherence, a laser light source that emits a linearly polarized light beam is preferably used as a recording/reproducing light source 38 for recording and reproduction of information. Specific examples of the laser light source, the recording/reproducing light source 38, include a laser diode, an He-Ne laser, an argon laser, and a YAG laser. For example, a blue laser diode of wavelength 405 nm is preferably used. A recording/reproducing light beam emitted by the recording/reproducing light source 38 is shaped into a parallel light beam by a beam expander 9. The parallel recording/reproducing light beam is guided by a mirror 10 and applied to a reflective spatial optical modulator 11.

Known examples of the reflective spatial optical modulator 11 are a digital micro-mirror device (DMD) and a reflective liquid crystal optical modulator. An example using DMD will be described below. DMD has a plurality of micro-mirrors two-dimensionally arranged like a lattice. DMD is configured so that varying the direction of the reflected light beam for each very small mirror enables the information light beam and reference light beam in a two-dimensional pattern to be simultaneously generated. The micro-mirrors of DMD is driven by a recording circuit 31 in accordance with recording information (information such as videos and music which is to be recorded) to provide the information light beam with information. The reference light beam is spatially modulated.

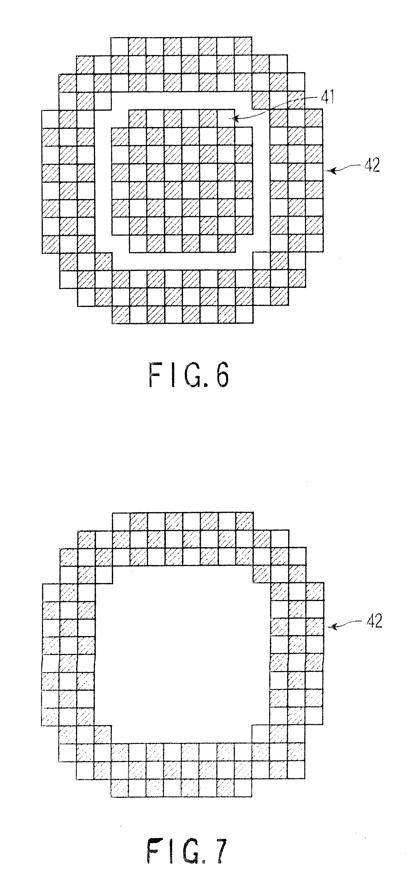

As a result, DMD, the spatial optical modulator 11 displays such a modulation pattern as shown in FIG. 6. In FIG. 6, the vicinity of the center of the modulation pattern is used as an information light beam area 41. The periphery of the modulation pattern is used as a reference light beam area 42. The center of the modulation pattern corresponds to the center of the optical axis of a light beam incident on DMD.

The recording/reproducing light beam incident on the spatial optical modulator 11 is reflected by the information light beam area 41 and the reference light beam area 42. The resulting reflected light beam enters a polarization beam splitter 14 via relay lenses 12 and 13. A recording/reproducing light beam emitted by the recording/reproducing light source 38 has its polarization direction adjusted at the time of the emission so that the resulting reflected light beam from the spatial optical modulator 11 passes through the polarization beam splitter 14. The light beam having passed through the polarization beam splitter 14 enters a dichroic prism 15. The wavelength property of the dichroic prism 15 is designed so as to allow light with the wavelength of the recording/reproducing light beam to pass through. The light beam having passed through the dichroic prism 15 passes through an optical rotation element 16 to further rotate the polarization direction. The light beam is then applied to the optical recording medium 1 by an objective lens 17 and focused so as to have the minimum beam diameter on the surface of the servo layer 5. The optical rotation element 16 may be a quarter wavelength plate or a half wavelength plate.

Thus, the optical recording medium 1 is irradiated, via the objective lens 7, with the light beam 6 with the center of its optical axis corresponding to the information light beam area 41 and the periphery of the optical axis corresponding to the reference light beam area 42. Then, the information light beam and the reference light beam interfere with each other inside the recording layer 3 to form a hologram 8 in the optical recording medium 1 (see FIG. 3). Information is thus recorded in the optical recording medium 1 as the hologram 8. The hologram 8 has a volume and this recording method is thus called digital volume holography.

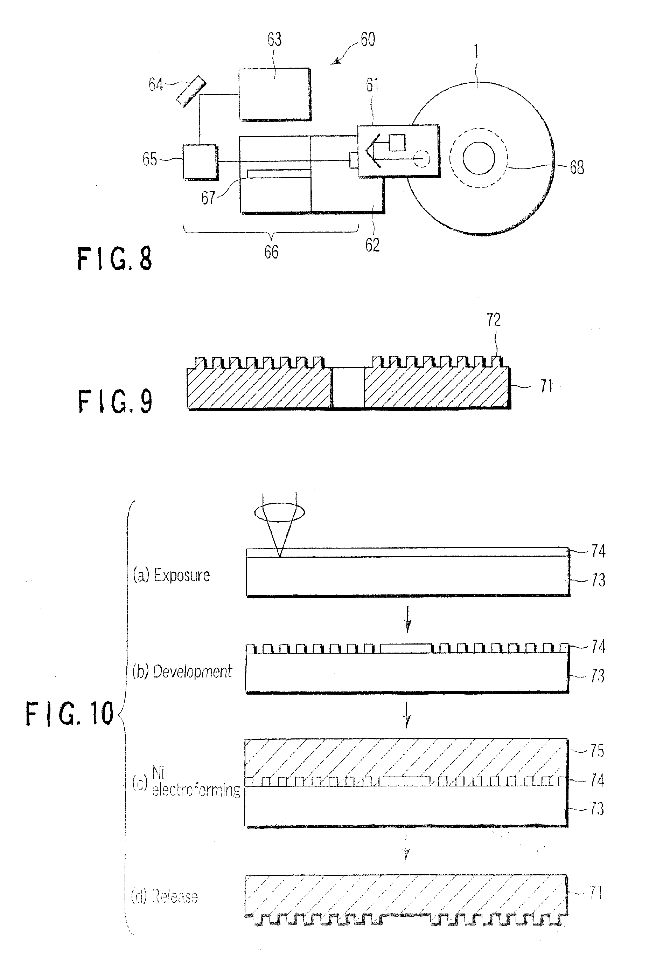

To reproduce recorded information, DMD, the spatial optical modulator 11 displays a modulation pattern of only the peripheral reference light beam area 42 as shown in FIG. 7. At this time, a part of the recording/reproducing light beam from the recording/reproducing light source 38 is reflected by the reference light beam area 42 of the spatial optical modulator 11 and applied to the optical recording medium 1 as a reference light beam as in the case of recording.

While passing through the optical recording medium 1, a part of the reference light beam is diffracted by the hologram 6 into a reproduction light beam. The reproduction light is reflected by the servo layer 5 and then passes through the objective lens 17 and then through the optical rotation element 16. At this time, the reproduction light is provided with a polarization component different from that of the reference light beam. After passing through the dichroic prism 15, the reproduction light beam is reflected by the polarization beam splitter 14. The angle through which the polarization direction is rotated by the optical rotation element 16 is desirably adjusted so as to maximize the reflectance of the reproduction light beam by the polarization beam splitter 14.

The reproduction light beam reflected by the polarization beam splitter 14 is formed into a reproduction image on a two-dimensional photodetector 21 such as a CCD array via relay lenses 19 and 20. On the other hand, a part of the reference light beam which has not been diffracted by the hologram 6 is spatially blocked by an iris 22 so as not to enter the photodetector 21. An output signal from the photodetector 21 is subjected to a process such as amplification or binarization by a reproduction circuit 32, resulting in reproduction information.

Now, a servo system of the optical recording and reproducing apparatus in FIG. 5 will be described. The optical recording and reproducing apparatus in FIG. 5 has a servo light source 23 in addition to the recording/reproducing light source 38. The servo light source 23 may be a laser light source such as a laser diode, an He-Ne laser, an argon laser, or a YAG laser similarly to the recording/reproducing light source 38. However, the laser light source constituting the servo light source 23 desirably has an emission wavelength different from that of the recording/reproducing light source 38. For example, a red laser diode of wavelength about 650 nm is preferably used.

Now, it is assumed that a blue laser diode is used as the recording/reproducing light source 38 and that a red laser diode is used as the servo light source 23. For a light beam of wavelength about 405 nm from the blue laser diode, the reflectance of the non-crystal phase area of the phase change layer 53 in the servo layer 5 is equivalent to that of the crystal phase of the phase change layer 53. For a light beam of wavelength about 650 nm from the red laser diode, the reflectance of the non-crystal phase area of the phase change layer 53 in the servo layer 5 is relatively high, whereas the reflectance of the crystal phase of the phase change layer 53 is relatively low. Accordingly, using the blue laser diode as the recording/reproducing light source 38 and the red laser diode as the servo light source 23 effectively varies the servo information 40 recorded in the servo layer 5, as seen in the difference between the contrast at the servo light beam wavelength and the contrast at the recording/reproducing light beam wavelength as shown in FIGS. 3 and 4.

A servo light beam emitted by the servo light source 23 is shaped into a parallel light beam by a collimator lens 24. The parallel light beam then enters a polarization beam splitter 25. The servo light beam has its polarization direction adjusted when emitted by the light source 23, so as to pass through the polarization beam splitter 27. The servo light beam having passed through the polarization beam splitter 25 then passes through an optical rotation element 26 and enters the dichroic prism 15. The optical rotation element 26 may be a quarter wavelength plate or a half wavelength plate. The dichroic prism 15 is designed to reflect the wavelength of the servo light beam. The servo light beam reflected by the dichroic prism 15 passes through the optical rotation element 16. The servo light beam is then applied to the optical recording medium 1 by the objective lens 17 and focused so as to have the minimum beam diameter on the surface of the servo layer 5.

The servo light beam applied to the optical recording medium 1 is reflected by the servo layer 5. Here, the servo light beam reflected by the servo layer 5 is called servo return light. The servo return light is modulated by the servo information recorded in the servo layer 5 as changes in the phase of the phase change layer. The servo return light is collimated by the objective lens 17 and then passes through the optical rotation element 16. The servo return light is further reflected by the dichroic prism 17 and passes through the optical rotation element 26. When passing through the optical rotation elements 16 and 26, the servo return light is provided with a polarization component different from that of the servo light beam emitted by the servo light source 23. The servo return light is thus reflected by the polarization beam splitter 25. The angle through which the polarization direction is rotated by the optical rotation element 26 is desirably adjusted so as to maximize the reflectance of the servo return light beam by the polarization beam splitter 25.

The servo return light reflected by the polarization beam splitter 25 passes through a convex lens 27 and a cylindrical lens 28 and is then detected by four-way split detector 29. A servo circuit 33 generates an address signal a focus error signal, and a tracking error signal on the basis of an output signal from the photodetector 29. On the basis of the address signal, the focus error signal, and the tracking error signal, a voice coil motor 18 is driven to move the objective lens 17 in the direction of the optical axis (focus direction) and in a direction orthogonal to the direction of the optical axis (tracking direction). This allows focus servo and tracking servo to be performed. The focus error signal may be generated from an output signal for information reproduction transmitted by the two-dimensional photodetector.

A method for recording servo information in the servo layer 5 may be non-contact recording using a laser beam as in the case with, for example, a conventional recording method for rewritable optical disks or the batch transfer of servo information based on contact heating using a servo stamper with servo information pre-recorded thereon.

First, description will be given of a procedure of recording servo information in a non-contact manner using a laser beam. The servo layer 5 formed using a sputter or the like has no recesses or projections. Accordingly, to record servo information, an exposure system capable of precise positioning, for example, an optical disk mastering device, is used.

FIG. 8 shows an example of a servo information recording apparatus 60. A recording optical system 61 for servo information includes an exposure light source that emits laser beams. Any exposure light source may be used provided that the exposure light source can effect a change in the phase of the servo layer in the optical recording medium 1. However, in connection with light condensation, a laser diode, an argon laser, a gas laser such as a crypton laser, or a solid laser such as a YAG laser is preferred. The recording optical system 61 is installed on a direct acting stage 62 and has its position precisely controlled by a feed screw 67 on the basis of a distance determined by a length measuring interference system 66 including a length measuring light source 64 and mirrors 64 and 65. The optical recording medium 1 is irradiated with a light beam from a recording optical system 41 while being rotated by a spindle motor 68 such as an air spindle motor. This allows servo information to be recorded in the servo layer 5 in the optical recording medium 1 as a phase change pattern for the phase change layer.

Now, description will be given of the batch transfer of servo information using a servo stamper.

FIG. 9 shows a schematic sectional view of a servo stamper 71. A recess and projection pattern 72 corresponding to servo information is formed on the servo stamper 71. A preferred material for the servo stamper 71 is such that when the servo stamper 71 is brought into contact with the optical recording medium 1, the recess and projection pattern 72 is unlikely to be deformed. The servo stamper 71 may be made of, for example, metal or metal oxide, ceramics, glass, a semiconductor, or a composite of these materials. The servo stamper 71 is desirably made of a material the temperature of which is unlikely to decrease when the servo stamper 71 is contacted with the optical recording material 1 for heating (the material has a high heat capacity). Thus, a preferred material for the servo stamper 71 is Ni, Al, Si, or glass.

With reference to FIGS. 10(a), (b), (c), and (d), description will be given of an example of a method for producing the servo stamper 71 made of Ni. First, as shown in FIG. 10(a), a photo resist film 74 formed on a glass plate 73 by spin coating is exposed in accordance with servo information using an apparatus similar to the servo information recording apparatus 60. Then, the photo resist film 74 is developed to produce a recess and projection pattern constituting a negative for the servo information, on the photo resist film 74 as shown in FIG. 10(b). An Ni thin film is formed by sputtering on the recess and projection pattern formed on the photo resist film 74. Ni electroforming is then performed by a plating process to form an Ni layer 75 as shown in FIG. 10(c). Finally, as shown in FIG. 10(d), the Ni layer 75 is released from the glass plate 73 to obtain the servo stamper 71 comprising the Ni layer 75.

Now, description will be given of a method for transferring servo information using the servo stamper 71.

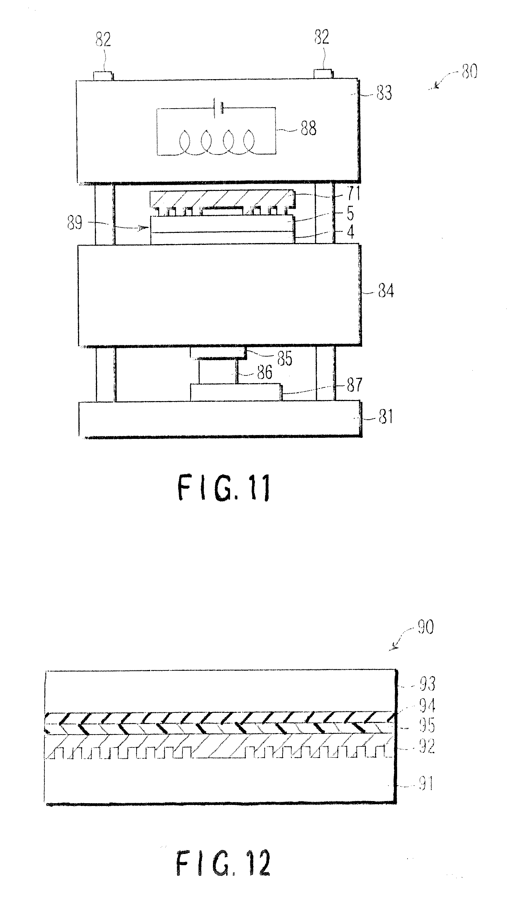

FIG. 11 shows an example of a servo information transfer apparatus 80. The servo information transfer apparatus 80 has an upper base plate 83 and a lower base plate 84 which penetrate guide posts 82 fixed to a base 81. The upper base plate 83 is fixed to the guide posts 82. The lower base plate 84 can move freely in a vertical direction with respect to the guide posts 82. The lower base plate 84 is coupled to a ball screw 86 via a load cell 85 the other end of which is coupled to a stepping motor 87. Accordingly, the lower base plate 84 can also be moved in the vertical direction by rotating the stepping motor 87. The upper base plate 83 has a heater 88.

The substrate 4 with the servo layer 5 formed thereon (a substrate 89 with a servo layer) is installed in the servo information transfer apparatus 80. The stepping motor 87 is operated to raise the lower base plate 84 with the upper base plate 83 and the lower base plate 84 kept parallel to each other. This brings the servo layer 5 into tight contact with the servo stamper 71. The heater 88 is then used to increase the temperature of the servo stamper 71 up to a value at which the phase of the servo layer 5 changes. The servo stamper 71 is subsequently cooled to transfer servo information as a crystal phase.

A method such as the non-contact recording using laser light or the batch transfer using the servo stamper as described above is used to record the servo information 40 as phase changes as shown in FIGS. 3 and 4.

Now, a more specific example will be described. In the present example, a procedure described below was used to produce the optical recording medium 1. The procedure of producing the optical recording medium 1 involves (1) production of a substrate with a servo layer, (2) production of a servo stamper, (3) transfer of servo information, and (4) formation of a recording layer.

### (1) <Production of a substrate with a servo layer>

A discoid flat glass substrate of thickness 0.5 mm was used as the transparent substrate 4. ZnS-SiO₂ layers were used as the interference layers 51 and 55 and the film thickness of the interference layers 51 and 55 was set so that the optical contrast is highest at a wavelength of 65 nm when the phase change layer 53 is in a crystal phase. In the present example, the interference layers 51 and 55 also act as the interface layers 52 and 54. An Al layer of thickness 200 nm was formed as the reflection layer 56.

### (2) <Production of a servo stamper>

The servo stamper 71 was produced using the following procedure. As shown in FIG. 10(a), a photo resist film was coated on the discoid glass plate 73. The servo information recording apparatus 60, shown in FIG. 8, was used to record servo information in an area with a radius ranging from 24 to 30 mm at a track pitch of 0.74 µm. A laser diode of wavelength 405 nm was used as the exposure light source included in the recording optical system 61. After exposure, a development step in FIG. 10(b) and an Ni sputtering and Ni electroforming step in FIG. 10(c) were executed to obtain the servo stamper 71 as shown in FIG. 10(d).

### (3) <Transfer of servo information>

The substrate 89 with the servo layer was placed on the lower base plate 84 of the servo information transfer apparatus 80, shown in FIG. 11, so that the servo layer 5 located above. The servo stamper 71 was then placed on the substrate 89 with the servo layer so that the surface with servo information recorded as recesses and projections was located below. Then, the upper base plate 83 was heated to 200°C, and the lower base plate 84 was raised to bring the servo layer 5 into tight contact with the servo stamper 71. The servo layer 5 and the servo stamper 71 were heated and then held for 5 seconds. Subsequently, the lower base plate 84 was lowered to stop heating the servo stamper 71. The servo stamper 71 was then left as it was. After the substrate 89 with the servo layer and the servo stamper 71 were cooled, the ball stamper 71 was removed.

### (4) <Formation of a recording layer>

In the present example, a photo polymer was used as a material for the recording layer 3. First, 3.86g of vinyl carbazole and 2.22g of vinyl pyrrolidone were mixed together, and 0.04g of Irgacure 784 (manufactured by Chiba Specialty Chemicals) was added to the mixture, which was then stirred. After all the chemicals were dissolved, 0.04g of Perbutyl H (manufactured by NOF Corporation) was mixed into the solution to prepare a monomer solution A. Then, 10.1g of 1, 4-butanedioldiglycidylether and 3.6g of diethylenetriamine were mixed together to prepare an epoxy solution B. Then, 1.5 ml of monomer solution A and 8.5 ml of epoxy solution B were mixed together. The mixture was degassed to prepare a recording layer precursor.

Then, a spacer of thickness 250 µm made of a fluorine resin was placed on a surface of the prepared substrate 89 with the servo layer which is located opposite the servo layer 5. The mixed solution of the monitor solution A and the epoxy solution B was cast between the substrate 89 and the spacer. After the casting, a separately prepared discoid glass substrate was located opposite the spacer and uniformly pressed to extend the mixed solution to a thickness of 250 µm. Finally, the substrate was heated at 50°C for 10 hours to produce the optical recording medium 1 having a recording area of thickness 250 µm. In the optical recording medium 1 produced in the present embodiment, the glass substrate forms the protective layer 2. The series of operations were performed in a room in which light of wavelength shorter than 600 nm was blocked so as to prevent the recording layer 3 from reacting to light.

### <Optical recording and reproducing apparatus>

For the optical recording and reproducing apparatus shown in FIG. 5, a further specific example will be described. In this case, a GaN-based laser diode (wavelength: 405 nm) having an external resonator was used as coherent light output by the recording/reproducing light source 38. A laser diode (wavelength: 650 nm) emitting linearly polarized laser beams was used as the servo light source 23. A CCD array was used as the two-dimensional photodetector 21. A quarter wavelength plate of wavelength 405 nm was used as the optical rotation element 16. A quarter wavelength plate of wavelength 650 nm was used as the optical rotation element 26. The orientation (rotation angle) of the quarter wavelength plate used as the optical rotation element 16 was adjusted so as to maximize the intensity of the reproduction light beam on the two-dimensional photodetector 21. The orientation (rotation angle) of the optical rotation element 26 was adjusted so as to maximize the intensity of servo return light on the four-way split photodetector 29.

### <Recording of information>

Then, the optical recording medium 1 produced by the procedures (1) to (4) was mounted in the optical recording and reproducing apparatus in FIG. 5. A track of radius 24 mm, a track of radius 36 mm, and a track of radius 48 mm were used for recording. In each track recording was performed at 4 spots arranged at intervals of 90°; in the entire optical recording medium recording was performed at 12 spots. The light intensity on the surface of the optical recording medium 1 was 0.1 mW. Exposure time was 0.1 seconds. For the spot size of the recording laser beam on the top surface of the recording layer 3, the spot had a diameter of about 400 µm. The reflective spatial optical modulator 11 had 400 × 400 = 160,000 pixels. An area of 144 × 144 = 20,736 pixels located in a central portion was used as the information light beam area 41. In the information light beam area 41, adjacent 4 × 4 = 16 pixels were used as a unit panel so that recording information was displayed using all of the 1,296 panels. To express recording information, 1 16:3 modulation method was used which used three of the 4 × 4 = 16 panels as bright panels. In this case, one pixel enables 256 pieces (1 byte) of information to be expressed.

### <Reproduction of recorded information>

A CCD array was used as the two-dimensional photodetector 21 to reproduce information recorded as the hologram 6. For reproduction, only the reference light beam area 42 such as the one shown in FIG. 7 was displayed on the reflective spatial optical modulator 11. A reflected light beam from the reference light beam area 42 was used as the reference light beam. The reference light beam on the surface of the optical recording medium 1 had an intensity of 0.01 mW.

### <Evaluation>

Then, the recording and reproducing performance of the optical recording and reproducing apparatus was evaluated using the following techniques.

### (1) Reproduction light beam intensity

The opening of the iris 22, shown in FIG. 5, was adjusted to allow only the information light beam part to enter the CCD array 22 as a reproduction light beam. The sum of the intensities detected by the CCD array, the two-dimensional photodetector 21, was defined as a reproduction light intensity.

### (2) Error count evaluation

A threshold was set for each pixel signal from the information light beam area 41 of 144 × 144 = 20,736 pixels, detected by the CCD array, that is, the two-dimensional photodetector 21. The thresholds were used to distinguish bright panels from dark panels to obtain an output pattern. The output pattern was compared with a pattern input to the reflective spatial optical modulator 11 and thus evaluated for an error count.

### (Comparative example)

### <Production of a substrate with a servo layer>

As a comparative example, a substrate 90 with a servo layer shown in FIG. 12 was produced by the following procedure. The servo stamper 71 in FIG. 9 produced in accordance with the procedure described above in (1) <Production of a servo stamper> was set in an injection molding press. Polycarbonate was then injected to produce a polycarbonate substrate 91 of thickness 0.6 mm to which servo information had been transferred as recesses and projections. Al was then sputtered onto the recess and projection surface to a thickness of 200 nm to form a reflection layer 92. On the other hand, a wavelength selection layer 94 was formed on a surface of a discoid flat glass substrate 93 of thickness 0.5 mm; the wavelength selection layer 94 reflects the recording/reproducing light beam (wavelength: 405 nm) while allowing the servo light beam (wavelength: 650 nm) to pass through. The substrates 91 and 93 were laminated together with an ultraviolet hardening resin to produce the substrate 90 with the servo layer, shown in FIG. 12. The ultraviolet hardening resin used for the lamination also served as a gap layer after hardening. The film thickness of the gap layer 95 was adjusted to 100 µm.

### <Formation of a recording layer>

A recording layer precursor was prepared as is the case with the above example. Then, a spacer of thickness 250 µm comprising a fluorine resin was placed on a surface of the glass substrate 93 of the substrate 90 with the servo layer, shown in FIG. 12. The above mixed solution was cast between the glass substrate 93 and the spacer. After the casting, a separately prepared discoid glass substrate was placed opposite the spacer and uniformly pressed to extend the mixed solution to a thickness of 250 µm. Finally, the substrate was heated at 50°C for 10 hours to produce an optical recording medium having a recording area of thickness 250 µm. Also in the comparative example, the recording layer was formed in a room in which light of wavelength shorter than 600 nm was blocked so as to prevent the recording layer from reacting to light.

### <Optical recording and reproducing apparatus>

The optical recording and reproducing apparatus was almost the same as that configured as shown in FIG. 3 except that the collimator lens 24 was adjusted so that the focal point of the servo light beam lies 100 µm outside of the focal point of the recording/reproducing light beam.

### <Recording of information>

Then, the optical recording medium produced by the above method was mounted in the optical recording and reproducing apparatus. Information was then actually recorded while performing servo. The recording method is the same as that in the above example.

### <Reproduction>

The information was reproduced by the same method as that in the above example.

### <Evaluation>

Evaluation criteria were the same as those used in the above example. Table 1 shows the reproduced light beam intensity and the error count determined in the example and in the comparative example.

**[Table 1]**

| Track position | | 24 mm | 36 mm | 48 mm |
|---|---|---|---|---|
| Example | Reproduced light beam intensity (µW) | 1.2 | 1.0 | 1.0 |
| | Error count | 0 | 1 | 4 |
| Comparative Example | Reproduced light beam intensity (µW) | 0.8 | 07 | 0.5 |
| | Error count | 7 | 13 | 67 |

It should be appreciated from these results that the example exhibits a higher reproduced light beam intensity and a smaller error count than the comparative example.

The present invention uses the simple structure having the flat servo layer without any recess or projection in which servo information is recorded as changes in the phase of the phase change layer, eliminating the need for a wavelength selection layer. The present invention also eliminates the need to slightly displace the focal point of the servo light beam from the focal point of the reproducing/reproducing light beam even with the presence of the gap between the servo layer and the wavelength selection layer. This makes it possible to provide an optical recording medium and an optical recording and reproducing apparatus which utilize holography (particularly digital volume holography) that is excellent in the compatibility among apparatuses.

## Claims

1. An optical recording medium (1) **characterized by** comprising:
a recording layer (3) having an incident side and an opposite side, a light beam (6) being incident on the incident side to record information as a hologram (8) produced in the recording layer (3); and
a servo layer (5) which is provided so as to face the opposite side of the recording layer (3) and includes a phase change layer (53), servo information being recorded as an optical phase change between a crystal phase and a non-crystal phase in the phase change layer (53).

2. The optical recording medium (1) according to claim 1, **characterized in that** the servo layer (5) has a flat surface at the opposite sides.

3. The optical recording medium (1) according to claim 1, **characterized in that** the servo layer (5) provides a relatively low optical contrast to a first light beam which records and reproduces the information and provides a relatively high contrast to a second light beam which reproduces the servo information.

4. The optical recording medium (1) according to claim 3, **characterized in that** the servo layer (5) includes an interference layer (51, 53) which emphasizes the optical contrast to the second light beam while reducing the optical contrast to the first light beam.

5. An optical recording medium (1) **characterized by** comprising:
a transparent substrate (4) having a first and a second surface opposing the first surface;
a recording layer (3) provided on the first surface of the substrate (4) and on which a light beam (6) is incident to record information as a hologram (8) produced in the recording layer (3); and
a servo layer (5) provided on the second surface of the substrate (4) and including a phase change layer (53) in which servo information is recorded as an optical phase change between a crystal phase and a non-crystal phase in the phase change layer (53).

6. The optical recording medium (1) according to claim 5, **characterized in that** the servo layer (5) has a flat surface provided on the second surface.

7. The optical recording medium (1) according to claim 5, **characterized in that** the servo layer (5) provides a relatively low optical contrast to a first light beam which records and reproduces the information and provides a relatively high contrast to a second light beam which reproduces the servo information.

8. The optical recording medium (1) according to claim 7, **characterized in that** the servo layer (5) includes an interference layer (51, 53) which emphasizes the optical contrast to the second light beam while reducing the optical contrast to the first light beam.

9. A method for manufacturing an optical recording medium (1), **characterized by** comprising:
a transparent substrate (4) having a first surface and a second surface opposing the first surface;
a recording layer (3) provided on the first surface of the substrate (4), a first light beam being incident to record information as a hologram (8) produced in the recording layer (3); and
a servo layer (5) provided on the second surface of the substrate (4) and including a phase change layer (53) in which servo information is recorded as an optical phase change between a crystal phase and a non-crystal phase in the phase change layer (53), the method comprising:
heating the phase change layer (53) to produce the phase change on the phase change layer (53) and record the servo information.

10. The method according to claim 9, **characterized in that** the heating includes focusing a second laser beam on the phase change layer (53) to produce the phase change.

11. The method according to claim 9, **characterized in that** the heating includes contacting a heat stamper on the phase change layer (53) and partially heat the phase change layer (53) to produce the phase change on the phase change layer (53) and record the servo information.

12. An optical recording and reproducing apparatus **characterized by** comprising:
an optical recording medium (1) comprising:
a transparent substrate (4) having a first surface and a second surface opposing the first surface;
a recording layer (3) provided on the first surface of the substrate (4); and
a servo layer (5) provided on the second surface of the substrate (4) and including a phase change layer (53) in which servo information is recorded as an optical phase change between a crystal phase and a non-crystal phase in the phase change layer (53);
a first light source (38) which generates a first light beam having a first wavelength;
a second light source (23) which generates a second light beam having a second wavelength;
a spatial optical modulator (11) configured to produce an information light beam modulated in accordance with information and a reference light beam in a recording mode;
an irradiation unit (12, 13, 14, 15, 16) which irradiates a combination of the information light beam and the reference light beam on the recording layer (3) to record information as a hologram (8) produced in the recording layer (3) in the recording mode and irradiates the second light beam on the servo layer (5) ;
split photo-detectors (29) which detect the second light beam reflected from the servo layer (5) to output detection signals; and
a servo unit (33) configured to generate servo signal from the output detection signals.

13. The optical recording and reproducing apparatus according to claim 12, **characterized in that** the first light source (38) include a red laser diode emitting the first light beam, and the second light source (23) includes a blue laser diode emitting the second light beam.

14. The optical recording and reproducing apparatus according to claim 12, **characterized in that** no information light beam is directed to the recording layer (3), the reference light beam is directed to the recording layer (3) and the second light beam is directed to the servo layer (5) to reproduce the information in a reproduction mode.

15. The optical recording and reproducing apparatus according to claim 12, **characterized in that** the irradiation unit (12, 13, 14, 15, 16) coaxially irradiates the information light beam, the reference light beam, and the second light beam on the optical recording medium (1).

16. The optical recording and reproducing apparatus according to claim 12, further comprising:
second photo-detectors (29) which detects the reference light beam reflected from the recording layer (3) to output second detection signals; and
a reproduction unit which generates information reproduced from second detection signals.
